# DEMANDE DE BREVET EUROPEEN

(11) **EP 1 016 348 A1**
(43) Date de publication de la demande: **05.07.2000**
(21) Numéro de dépôt: 98928345.2
(22) Date de dépôt: 26.06.1998
(51) Int. Cl.: A23N 1/00, B30B 9/02, G07F 13/00

(54) **MACHINE AUTOMATIQUE DE DISTRIBUTION DE JUS DE FRUITS NATURELS**

(30) Priorité: 26.06.1997 ES 9701407
(71) Demandeur: Catarain Arregui, Esteban, 20180 Oyarzun (ES)
(72) Inventeur: Catarain Arregui, Esteban, 20180 Oyarzun (ES)
(74) Mandataire: Urizar Barandiaran, Miguel Angel
(86) Numéro de dépôt international: ES9800186
(87) Numéro de publication internationale: WO9900024

(57) **Abrégé**

Machine automatique de fourniture de jus de fruit naturels, formée par un ensemble fonctionnel qui comprend un système d'alimentation avec dosage unitaire des fruits (7), à partir d'une trémie de charge, incorporant ensuite un système presseur se composant d'un mécanisme de débit en morceaux (19) et le presseur proprement dit formé par une tête rotative qui se trouve incluse dans un collecteur (25); l'ensemble comprenant un système éliminateur de déchets, avec un broyeur (30) et une sortie (33) d'expulsion; et en outre un système de nettoyage automatique, formé par un réseau (36) de distribution d'eau, avec des sorties de projection en différents points.

## Description

Par leur qualité et leur côté appétissant comme rafraîchissements, les jus de fruit sont des produits de grande consommation enregistrant une demande en croissance constante. Il convient de faire une place à part, en ce sens, aux jus de fruit de type naturel et en particulier aux fruits à presser, tels que orange, citron, pamplemousse, etc., compte tenu de leurs propriétés vitaminiques.

Il n'empêche que la dégradation rapide dont souffrent certaines qualités desdits jus de fruit incite à conseiller leur préparation juste au moment de leur consommation, pour profiter efficacement de toutes les propriétés.

Pour la réalisation du pressage visant à l'élaboration des jus, il a été développé une pluralité d'ustensiles de type manuel ou semi-manuel à fonctionnement électrique, pour en arriver dans le cadre d'une évolution plus poussée, à la réalisation de machines sous un concept d'automatisme, pour l'obtention des jus par un simple actionnement de demande, sans besoin de recourir à une intervention d'opérateur pour l'élaboration.

Les machines développées en ce sens pâtissent néanmoins de défauts et d'inconvénients relatifs à une excessive complexité fonctionnelle, laquelle se répercute en coûts et pannes, et jusque dans la qualité du produit, avec le facteur aggravant dans certains cas d'un mauvais traitement des fruits, faisant que certaines qualités, comme le goût, la couleur, etc., en résultent affectées.

En général, les machines mentionnées requièrent en outre un nettoyage manuel dans la mesure où, soit elles ne disposent pas de nettoyage automatique, soit celui-ci s'avère défectueux et insuffisant, de sorte que placé devant la charge fastidieuse et laborieuse que constitue le nettoyage à chaque utilisation, le nettoyage à fond n'a lieu que de temps à autre, et l'on voit travailler pendant ce temps les machines avec des restes qui s'y trouvent accumulés, ce qui a une incidence de toute évidence sur la qualité du produit élaboré.

Considérant tous ces inconvénients et l'opportunité de les éliminer, d'accord avec la présente invention, il est proposé une nouvelle machine automatique servant des jus à partir de fruits pressés, laquelle a été développée conformément à des caractéristiques de construction et fonctionnelles qui la rendent très avantageuse d'un point de vue opératoire par rapport aux machines et ustensiles existant à ce jour pour ladite fonction.

Cette machine objet de l'invention consiste à la base en un ensemble de mécanismes qui se trouvent logés en milieu réfrigéré à l'intérieur d'une enceinte ou carcasse de logement, comprenant un système de nettoyage automatique, formé par un circuit d'eau à pression qui débouche dans des injecteurs à projection localisés dans toutes les parties fonctionnelles de traitement du produit.

L'ensemble fonctionnel comprend un système d'alimentation, formé par une trémie de charge et un séparateur doseur unitaire des fruits, un système de pressage, comprenant un débiteur des fruits en morceaux et un extracteur de jus, un système d'élimination de déchets, formé par un broyeur et une sortie d'expulsion à injection hydropneumatique, et le système intégré de nettoyage, le tout contrôlé par un équipement électronique programmable.

On obtient de la sorte un ensemble simple de réalisation constructive et fonctionnelle, capable de développer par lui-même tout le processus d'élaboration et de fourniture de jus de fruit, à partir d'une charge majoritaire de fruits dans la trémie d'alimentation, en éliminant les déchets résultant de chaque opération, et avec la réalisation à chaque fois d'un nettoyage total de toutes les parties en contact avec le produit, en évitant complètement que des déchets d'autres processus précédents puissent corrompre en tout état de cause le jus en cours d'élaboration.

Etant donné que l'ensemble fonctionnel est inclus dans un milieu réfrigéré à l'intérieur d'une carcasse de logement close, les jus que la machine fournit s'avèrent de plus être directement froids, dans des conditions optimales pour la consommation, sans besoin de devoir les adapter thermiquement au moyen de glace ou tout autre moyen de refroidissement et, en tout cas, sans avoir à rajouter de conservants au produit, pour autant que celui-ci est servi directement pour la consommation après élaboration.

L'ensemble intégré de la machine, avec ledit ensemble fonctionnel compris et clos à l'intérieur d'une carcasse de logement, permet par ailleurs une disposition raccordée à un réseau de fourniture d'eau et à une canalisation de puisard, mais également en disposition de fonctionner de manière autonome, y compris à l'intérieur de l'enceinte de la carcasse un réservoir à eau et un bac de récupération des déchets; ce qui offre la possibilité d'installation de la machine en tout endroit, y compris comme machine en libre-service, sans besoin de travaux d'adaptation pour ce faire.

Pour toutes ces raisons, cette machine objet de l'invention s'avère à coup sûr de caractéristiques très avantageuses qui lui confèrent une vie propre en soi et un caractère préférentiel par rapport aux dispositifs utilisés à ce jour pour la même fonction d'élaboration de jus à partir de fruits à presser.
La figure 1 représente une perspective extérieure de la machine préconisée, selon un exemple non limitatif de la carcasse correspondante.

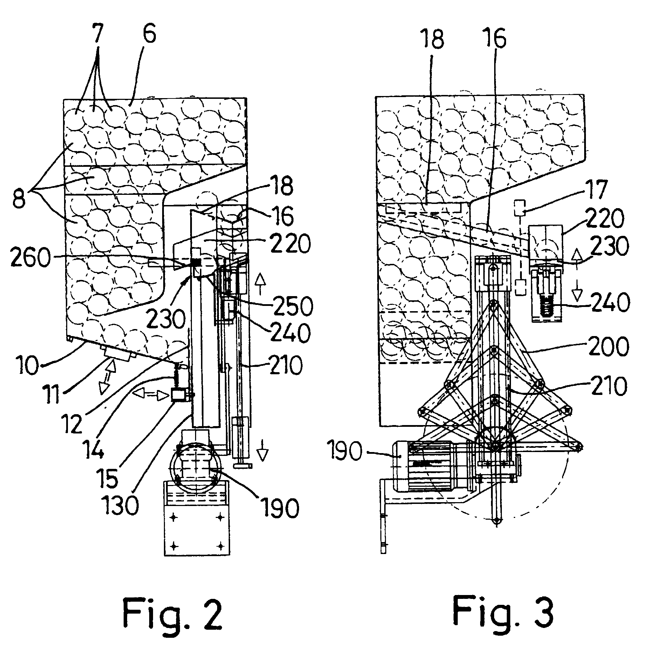

La figure 2 est une représentation schématique du système d'alimentation des fruits à presser dans l'ensemble fonctionnel.
La figure 3 est une vue latérale de la figure 2.
Les figures 4 et 5 représentent une séquence du processus de séparation et de dosage unitaire des fruits, en phases successives.
La figure 6 est une perspective schématique de la partie fonctionnelle correspondant au presseur proprement dit.
Les figures 7 à 10 représentent une séquence du processus fonctionnel du presseur, en quatre phases successives.

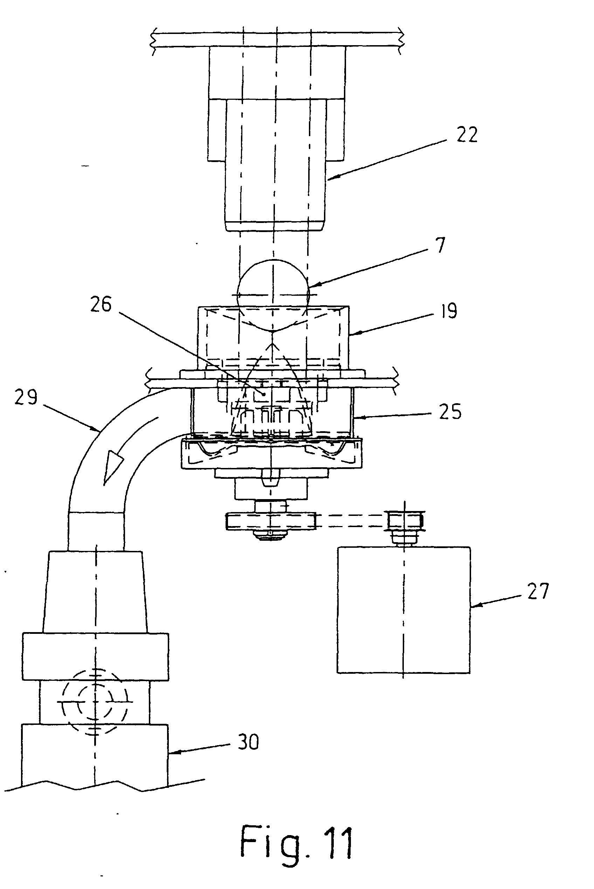

La figure 11 est une représentation schématique de l'ensemble du presseur, avec la sortie d'expulsion des déchets vers le broyeur.
La figure 12 est une perspective schématique du presseur, avec la sortie d'expulsion des déchets et l'acheminement du jus de fruit jusqu'au verre de fourniture.

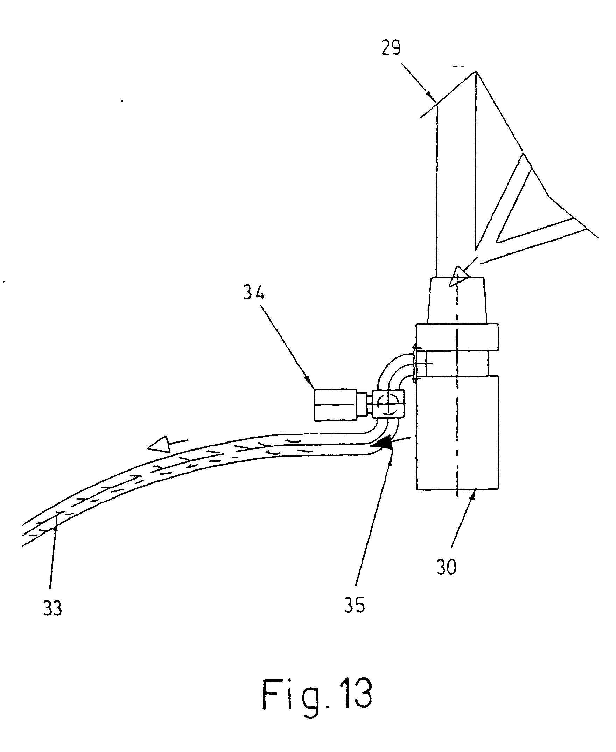

La figure 13 est un schéma du système d'élimination des déchets.

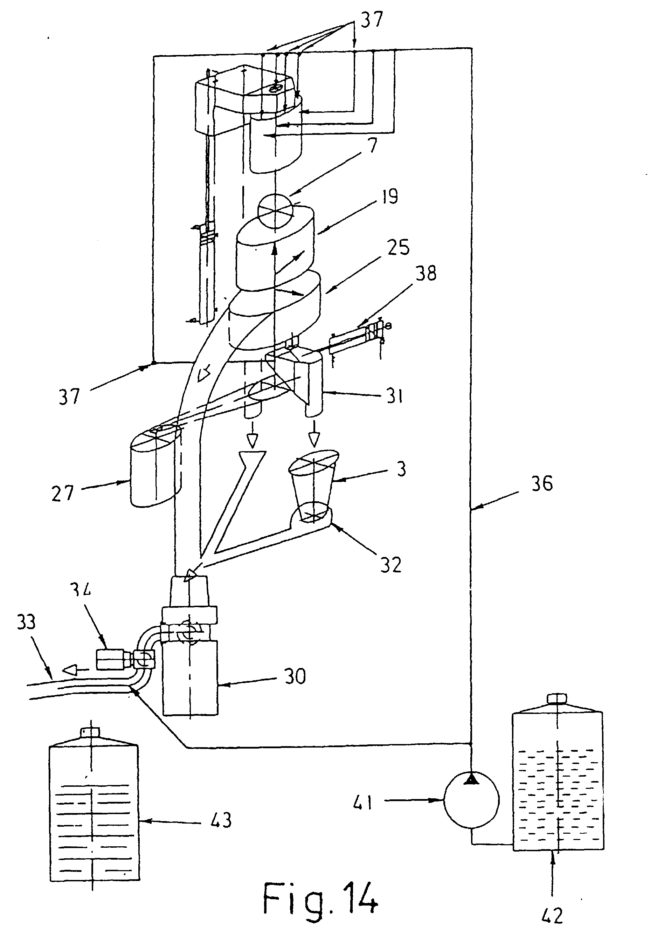

La figure 14 est une représentation schématique de l'ensemble fonctionnel avec le système de nettoyage automatique.

L'objet de l'invention se réfère à une machine destinée à la réalisation et la fourniture de jus de fruits à presser, tels que orange, citron, pamplemousse, etc., à travers un fonctionnement totalement automatique, sans besoin d'intervention d'opérateur sinon pour charger les fruits à presser.

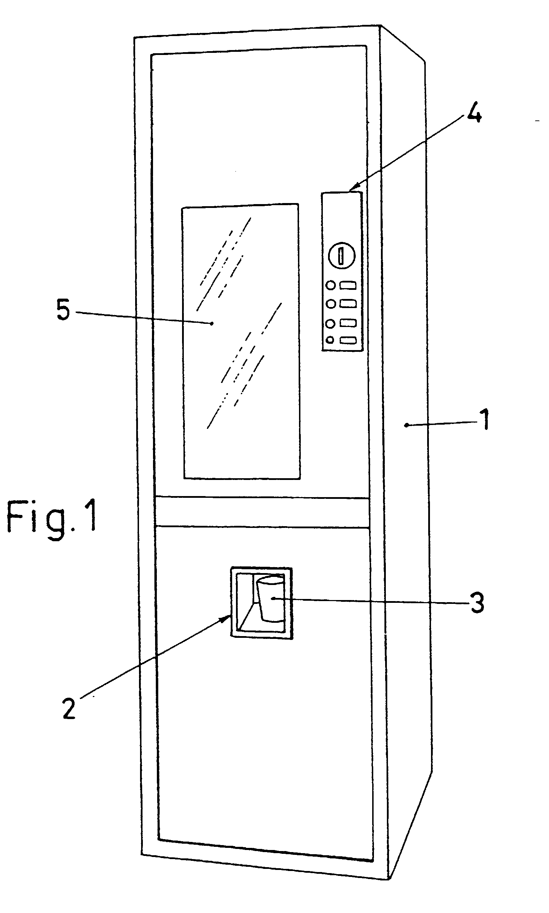

Ladite machine est constituée par un ensemble fonctionnel qui se trouve inclus à l'intérieur d'une carcasse de logement (1), laquelle peut être de quelque forme et configuration, une réalisation étant prévu, sans que celle-ci soit limitative, pour libre-service, tel que par exemple dans la forme que représente la figure 1, avec une sortie (2) de fourniture de verres (3) avec le jus de fruit correspondant, avec la possibilité d'un panneau (4) d'introduction de pièces de monnaie et d'une sélection de différents types de jus, par exemple avec sucre, sans sucre, etc. Il est également prévu l'existence d'une fenêtre transparente (5) afin de pouvoir observer de l'extérieur le processus fonctionnel du pressage.

L'ensemble fonctionnel comprend une série de parties constitutives de systèmes partiels du processus fonctionnel, comprenant un système d'alimentation, un système de pressage, un système d'élimination des déchets et un système de nettoyage automatique.

Le système d'alimentation se trouve formé par une trémie (6), laquelle peut avoir une capacité variable, par exemple de 10 à 100 kg., dans laquelle sont chargés les fruits (7) destinés à être pressés, lesquels pour leur part peuvent être de tout calibre, puisque ceci n'affecte pas le processus fonctionnel de la machine.

Ladite trémie (6) peut se trouver librement ouverte dans la partie supérieure, ou disposer d'un couvercle ou trappe de fermeture, étant prévu que la partie frontale possède au moins un viseur transparent (8) pour observer le niveau de charge.

Comme fond inférieur ladite trémie (6) possède de plus une plaque (10) inclinée, basculable et soumise à vibration car appuyée sur un vibrateur (11), constituant un agitateur, lequel permet de faire bouger les fruits (7) pour faire que ceux-ci sortent comme il convient vers l'entraîneur (18), de sorte qu'aucun fruit (7) abîmé ou pourri ne puisse demeurer à la base de la trémie (6).

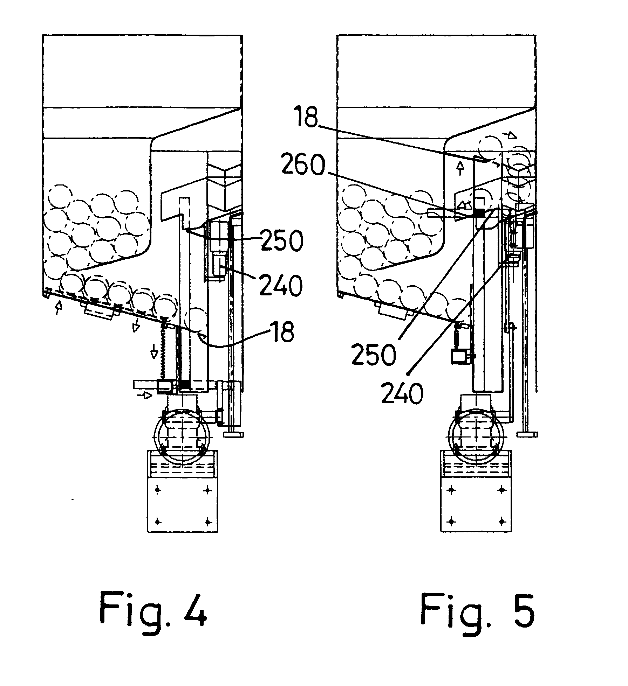

Ladite sortie de la trémie (6) comprend une vanne (12) à guillotine qui retient les oranges au-dessus de la base (10). Ladite vanne glisse sur des guides (130) sous l'action d'un ressort (14). Conjugué à cette vanne (12) se trouve disposé un électro-aimant (15). Quand sur la rampe (16) il n'y a pas de présence de fruits (7) et que ce fait est détecté par la photocellule (17), elle donne l'ordre à l'électro-aimant (15), qui se trouvant activé fait déborder son axe, au vibrateur (11) et à l'entraîneur d'élévation (18) pour qu'ils soient activés, ce qui provoque que cet entraîneur (18) glisse de manière descendante vers la position du dessin -figure 4- en même temps que le vibrateur (11) provoque des vibrations et produit avec un glissement aisé sur la base (10) du fruit (7). Lors de la descente de l'entraîneur (18) il enchatonne avec l'axe de l'électro-aimant (15) en l'entraînant et avec lui la vanne (12) qui libère les fruits (7).

A ce moment les fruits sont déposés (7) sur l'entraîneur (18), pour être élevés vers la rampe supérieure inclinée (16). Tout ceci se produit du fait de la force du moteur (190) qui agit moyennant les leviers (200) à la tête desquels est fixé l'entraîneur (18) et lesquels transmettent ladite force en sens ascendant et descendant en utilisant pour guides les bancs de glissement (210).

Le fruit (7), une fois déposé sur la rampe (16) descend jusqu'au doseur (220) sous contrôle électrique-électronique.

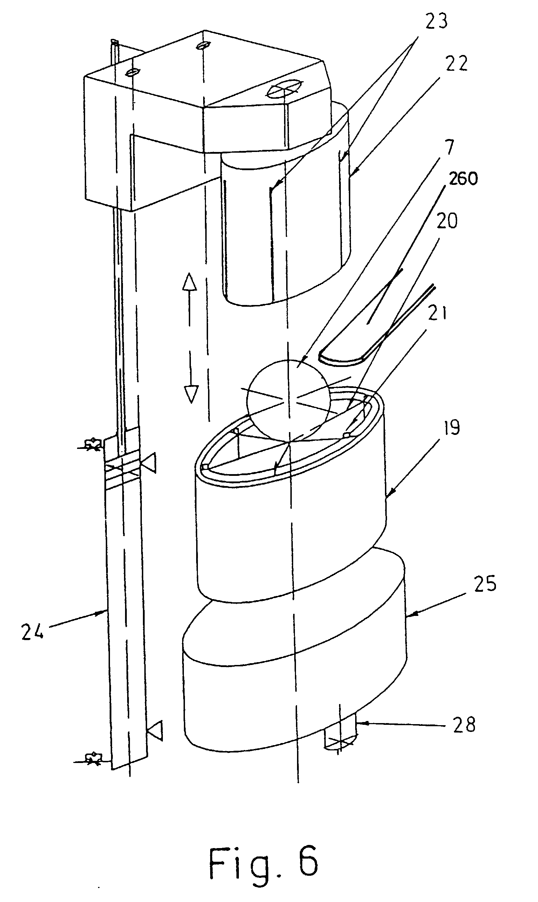

Sur ledit doseur, le fruit (7) reste coincé par la plaque (230) jusqu'à ce que le système électronique de la machine ne lui donne à l'électro-aimant (240) l'ordre être activé pour faire monter la plate-forme (250) qui expulse le fruit (7) par la rampe (260) - figure 5 et 6- en autorisant l'introduction du fruit (7) dans le presseur et la finalisation de la séquence de dosage du produit (7).

Le mécanisme du presseur consiste on un corps annulaire (19), pourvu on son sein d' une série de lames radiales (20), laissant déborder au niveau supérieur dans la partie périphérique des protubérances (21), lesquelles servent de butées de retenue pour maintenir sur les lames (20) le fruit (7) fourni chaque fois depuis la rampe (260) du doseur (220).

Par dessus le corps mentionné (19) se trouve situé un dispositif pousseur (22), dont l'extérieur coïncide avec le diamètre intérieur du corps (19), on possédant on outre des rainures radiales (23) lesquelles coïncident on positionnement et dimension avec les lames (20). Ledit dispositif pousseur (22) est actionnable on déplacement vertical par un cylindre actionneur (24), de sorte que la descente est prévue par l'intérieur du corps (19) ou par tout autre moyen conventionnel comme, par exemple, un moteur et un système de leviers.

En dessous du corps (19) est situé un collecteur (25), dans lequel se trouve incorporée dans le plan axial la tête presseuse (26), librement rotative, susceptible d'être actionnée par un moteur (27); ledit collecteur (25) déterminant une cavité pour collecter le jus et les restes provenant du pressage, avec une sortie inférieure (28) pour l'évacuation du jus, tandis que sort latéralement un conduit (29), qui va aboutir à un broyeur (30).

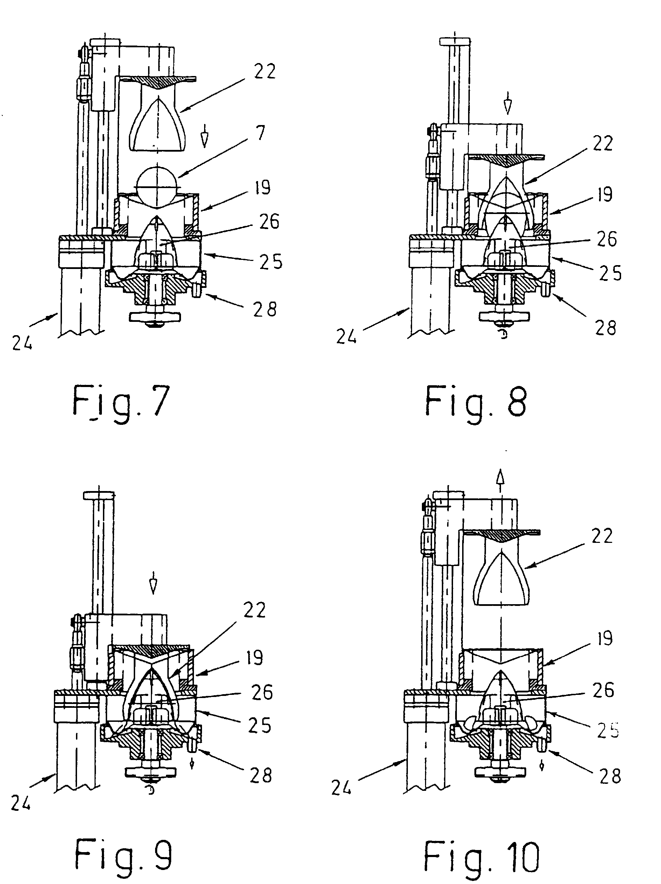

De la sorte, quand le fruit (7) à presser se trouve situé sur les lames (20) du corps (19), ainsi que le représente la figure 7, le dispositif pousseur (22) descend en obligeant le fruit (7) à passer à travers les lames (20), ainsi que représenté à la figure 8, on faisant que le fruit (7) se retrouve sectionné on autant de morceaux que le corps (19) possède de lames (20).

En même temps qu'a lieu cette coupe du fruit (7), celui-ci étant poussé vers le bas, intervient l'entrée on fonctionnement du moteur (27), celui-ci agissant sur la rotation de la tête presseuse (26) à une vitesse lente appropriée pour le pressage, ceci faisant que la pulpe des morceaux du fruit (7) se trouve défaite, le jus se séparant, pour passer à travers un moyen de filtrage et tomber par la sortie (28), ainsi que le représente la figure 9.

Une fois procédé au pressage, le dispositif pousseur (22) revient à nouveau dans la position supérieure, conune le représente la figure 10, les déchets qui en résultent restant sur le dessus du moyen filtrant, de manière que lorsque s'active le moteur (27) à une vitesse rapide, la rotation acquise à cette vitesse par la tête (26) fait que lesdits déchets sont expulsés par la force centrifuge, en sortant par le conduit latéral (29) vers le broyeur (30).

Le jus filtré tombe pour sa part par la sortie (28) vers un collecteur (31), duquel il se décharge sur le verre (3) de fourniture.

La position du verre (3) disposé pour recevoir le jus provenant du fruit pressé, se situe sur un collecteur (32) de déversements, lequel se trouve en communication avec le broyeur (30), de manière à ce que les éventuels débordements du jus ou suc qui tombent hors du verre (3) aillent échouer à leur tour dans le broyeur (30).

En tout cas, pour éviter des débordements inutiles, il a été prévu que le remplissage du verre (3) jusqu'au niveau désiré sera contrôlé par une cellule photoélectrique, de sorte qu'en atteignant le niveau prévu automatiquement se produise l'arrêt des cycles de pressage, l'arrêt de l'alimentation en fruits (7) intervenant par l'action du doseur (13).

Les déchets provenant des fruits pressés sont déchiquetés dans le broyeur (30) pour former une masse semi-liquide qui passe dans un tube de décharge (33), dans lequel ladite masse s'introduit par l'action du brassage occasionné par l'appareil en fonctionnement et par l'action de la gravité, de manière qu'à un moment donné une vanne (34) située à la sortie du broyeur (30) obture le passage, en même temps qu'est injectée dans le tube mentionné (33) une projection (35) d'eau et d'air sous pression, en donnant lieu à ce que la masse résiduelle existante dans ledit tube (33) soit impulsée tout au long de celui-ci vers une embouchure correspondante d'évacuation.

L'ensemble fonctionnel de la machine comprend de plus un système de nettoyage automatique, formé par un réseau (36) de distribution d'eau à pression, laquelle, à travers une série d'injecteurs (37) permet la projection d'eau dans des points déterminés de la zone de pressage et du conduit (29) d'expulsion des déchets.

Ce système de nettoyage entre en fonctionnement à la finalisation du processus de réalisation de chaque jus de fruit selon la programmation établie, de manière qu'à la suite de chaque séquence fonctionnelle la machine demeure totalement libre de déchets et que toutes les parties avec lesquelles le produit entre en contact soient propres, pour parvenir ainsi à des conditions hygiéniques absolues et une qualité parfaite des jus de fruit produits, sans qu'en aucune sorte ceux-ci ne se retrouvent corrompus par des restes ou de la saleté provenant d'autres élaborations précédentes.

Le collecteur (31) de décharge de jus ou sue vers le verre (3) de fourniture est prévu avec possibilité de situation dans deux positions, en mobilité par exemple, moyennant un cylindre actionneur (38), de manière qu'en phase de production de jus il demeure situé avec la sortie (39) pour décharger sur les verres (3), alors que dans la phase de nettoyage il demeure avec sortie (40) à un conduit d'évacuation vers le broyeur (30), de sorte que les fluides du nettoyage passent directement dans celui-ci.

Tout ledit ensemble fonctionnel de référence de la machine est prévu pour fonctionner automatiquement, en s'établissant à telle fin en rapport avec un équipement électronique programmable qui contrôle le fonctionnement, en donnant lieu à la réalisation successive des différentes phases opératoires d'alimentation des fruits (7), le pressage et le nettoyage, selon la programmation qui sera établie, sans besoin à aucun moment d'une intervention d'opérateur, laquelle uniquement est requise pour charger la trémie (6) avec les fruits (7) destinés à presser.

Le tout permet que la machine puisse être installée en connexion de réseau (36) à une prise de fourniture d'eau, et, le cas échéant, le tube de décharge (33) raccordé à un réseau d'évacuation. Mais sur un même mode, sans que ceci altère le concept ni le fonctionnement de l'ensemble de la machine, le réseau (36) peut être alimenté moyennant une pompe d'impulsion (41) à partir d'un réservoir à eau (42) situé à l'intérieur de la propre carcasse (1); en pouvant intégrer par ailleurs à l'intérieur de la même carcasse (1) un bac (43) de collecte des déchets, dans lequel débouche le tube (33); avec lequel la machine s'avère susceptible d'un fonctionnement autonome, pouvant être installée directement en n'importe quel endroit, sans besoin de procéder à des travaux d'adaptation la concernant, même s'il n'y a ni prise d'eau ni puisard.

L'ensemble fonctionnel de la machine est prévu par ailleurs inclus à l'intérieur de la carcasse (1) dans un milieu réfrigéré, ce qui facilite la conservation des fruits (7) dans la trémie (6), en même temps que les jus de fruit qui sont fournis sortent frais, dans des conditions appropriées à la consommation directe, sans devoir être refroidis par d'autres moyens.

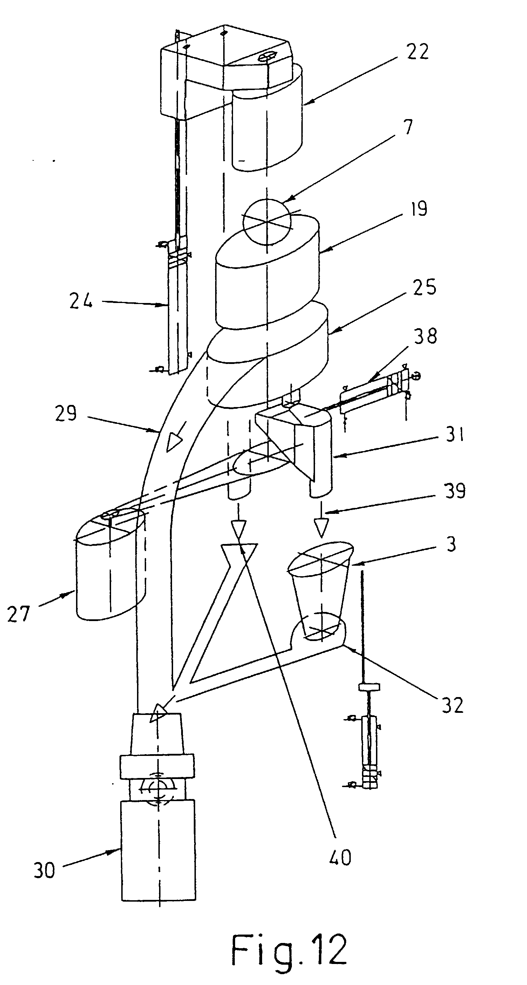

Sur la figure 12 au lieu d'un cylindre actionneur (38) qui donne lieu au mouvement de rotation du collecteur (31) on peut disposer que ledit collecteur (31) soit fixe mais avec deux conduites qui déboucheront respectivement dans le verre (3) ou dans le broyeur (30), en disposant de moyens, par exemple, un électro-aimant pour obturer ou ouvrir/fermer l'un des conduits.

## Revendications

1. Machine automatique pour la fourniture de jus de fruit naturels se caractérisant en ce qu'elle est constituée par un ensemble fonctionnel qui comprend un système d'alimentation des fruits (7) à presser, avec dosage unitaire de ces derniers à partir d'une trémie (6) de charge, un système presseur, formé par un mécanisme broyeur et le presseur proprement dit, un système d'élimination de déchets, avec un broyeur (30) et une sortie (33) d'expulsion, de même qu'un système de nettoyage automatique, formé par un réseau (36) de distribution d'eau, avec sortie de projection en différents points des zones dans lesquels il y a contact avec le produit.

2. Machine automatique pour la fourniture de jus de fruits naturels selon revendication antérieure, se caractérisant en ce que le système d'alimentation consiste dans le fait que :
a) de disposer dans la trémie (6) comme fond inférieur d'une plaque inclinée qui s'appuie sur un vibreur (11) de sorte qu'aucun fruit ne puisse rester retenu dans la trémie, en disposant à sa sortie d'une vanne à guillotine (12) commandée par un électro-aimant (15);
b) un entraîneur (18) ascendant/descendant qui prend les fruits (7) qui sortent de la vanne à guillotine (12) et les conduit à une rampe supérieure (16) inclinée par laquelle les fruits descendent à
c) un doseur (220) sous contrôle électrique-électronique où le fruit (7) reste jusqu'à ce qu'on lui ordonne sa libération pour passer au système presseur.

3. Machine automatique pour la fourniture de jus de fruits naturels selon la première revendication, se caractérisant en ce que le mécanisme chargé de débiter en morceaux les fruits (7) dans le système presseur consiste en un corps annulaire (19), pourvu en son intérieur de lames radiales, par dessus lequel se situe un pousseur (22) déplaçable dans le plan vertical, capable de pousser les fruits à travers les lames (20) pour leur débitage, alors qu'en dessous se trouve située la tète presseuse (26), actionnable au niveau rotation par un moteur (27) à deux vitesses, qui agissant en même temps que chaque fruit (7) descend obligé par le pousseur (22).

4. Machine automatique pour la fourniture de jus de fruits naturels. Selon les première et troisième revendications, elle se caractérise en ce que depuis le côté latéral du collecteur (25) sur lequel se trouve incorporée la tête presseuse (26) sort un conduit (29), à travers lequel sont expulsés par la force centrifuge les restes du produit (7) pressé, pour sa conduite vers le broyeur (30).

5. Machine automatique pour la fourniture de jus de fruits naturels, selon la première revendication, se caractérisant en ce que le réseau (36) d'expulsion des déchets dispose d'une vanne obturante (34) et d'un projecteur (35) d'eau et d'air à pression pour l'entraînement des déchets vers la sortie d'évacuation.

6. Machine automatique pour la fourniture de jus de fruits naturels, selon la première revendication, se caractérisant en ce que le réseau (36) de nettoyage peut être raccordé à une prise extérieure de fourniture d'eau, ou être alimenté moyennant une pompe (41) à partir d'un réservoir autonome (42) inclus dans la propre machine.

7. Machine automatique pour la fourniture de jus de fruits naturels, selon la première et cinquième revendications, se caractérisant en ce que la sortie (33) d'expulsion des déchets peut être raccordée à un réseau extérieur de puisard, ou déboucher dans un bac (43) de collecte de déchets inclus dans la propre machine.

8. Machine automatique pour la fourniture de fruits naturels, selon la première revendication, se caractérisant en ce que tout l'ensemble fonctionnel se trouve dans une carcasse (1), dans l'enceinte de laquelle est établi un milieu réfrigéré qui favorise la conservation des fruits (7) et permet la fourniture des jus de fruit frais, dans des conditions de température appropriée pour la consommation.
